# FASCICULE DE BREVET EUROPEEN

(11) **EP 0 718 794 B1**
(45) Date de publication et mention de la délivrance du brevet: **12.11.1997**
(21) Numéro de dépôt: 95402814.8
(22) Date de dépôt: 14.12.1995
(51) Int. Cl.: G06K 19/073, G07F 7/10

(54) **Procédé pour accroître la sécurité d'un circuit intégré**
Verfahren zur Erhöhung der Sicherheit eines integrierten Schaltkreises
Method for increasing the security of an integrated circuit

(30) Priorité: 19.12.1994 FR 9415269
(43) Date de publication de la demande: 26.06.1996
(73) Titulaire: SGS-THOMSON MICROELECTRONICS S.A., 94250 Gentilly (FR)
(72) Inventeur: Wuidart, Sylvie, Cabinet Ballot-Schmit, F-94230 Cachan (FR)
(74) Mandataire: Schmit, Christian Norbert Marie

(56) Documents cités:
- EP-A- 0 314 148
- EP-A- 0 481 881
- EP-A- 0 482 975
- FR-A- 2 513 408
- FR-A- 2 580 834

## Description

L'invention concerne un procédé pour accroître la sécurité d'un circuit intégré.

Elle s'applique tout particulièrement aux cartes à circuits intégrés pour lesquelles une sécurité doit être assurée contre toute tentative d'utilisation frauduleuse (cartes à usage bancaire ou cartes de contrôles d'accès à des locaux protégés).

Pour ces applications, les circuits intégrés comportent au moins un microprocesseur et des mémoires volatiles qui contiennent des informations confidentielles. Les informations ne doivent pas pouvoir être altérées ni transmises à l'extérieur par des manoeuvres frauduleuses.

A cet effet de nombreux capteurs de sécurité sont prévus pour détecter des conditions anormales de fonctionnement, pour lesquels il convient d'interdire le fonctionnement du circuit intégré.

On prévoit ainsi un capteur de fréquence trop basse (une fréquence trop basse permet d'espionner plus facilement le fonctionnement interne), un capteur de tension trop haute ou trop basse (car une tension trop haute ou trop basse peut altérer le contenu des cellules mémoires que l'on lit ou que l'on écrit), un capteur de température trop haute ou trop basse ou encore un capteur de dépassivation ou de lumière.

Les capteurs de sécurité délivrent chacun un signal binaire dont l'état indique un fonctionnement normal ou une anomalie.

Ces signaux binaires sont utilisés pour sécuriser le circuit intégré.

Ils peuvent déclencher directement une protection matérielle : blocage de l'horloge, initialisation forcée en permanence ou autres.

Ils peuvent être utilisés dans le cadre d'une protection logicielle. Un registre de mémorisation est alors associé à chacun des capteurs. Les différents registres sont échantillonnés par le microprocesseur qui décide de tenir compte ou non des différentes alarmes et, le cas échéant, l'action à entreprendre : réinitialisation, verrouillage, destruction des données confidentielles, ...

Les registres sont de type monostable en général. La détection d'une alarme les fait basculer et seule une procédure sécurisée de réinitialisation, gérée par le microprocesseur, peut les remettre dans l'état initial.

On pourrait traiter les capteurs par le biais des interruptions de programme : le basculement d'un registre d'un capteur provoque une interruption microprocesseur, avec un programme correspondant de gestion des interruptions.

En pratique, les signaux d'interruption ne sont pas si nombreux et ils sont réservés à d'autres usages. On a donc préféré une exploitation logicielle et séquentielle des capteurs, car elle permet d'établir des degrés de sécurité selon les applications et aussi de gérer les fausses alarmes.

Cette solution est plus souple, puisqu'elle permet de ne pas faire de verrouillage systématique. L'état des capteurs est alors contrôlé en séquence, au cours de l'exécution des différents programmes d'instruction.

Un procédé tel que décrit précédemment est divulgué par la demande de brevet européen EP-A-0 481 881.

Mais on s'est aperçu que l'exploitation séquentielle des états des capteurs pouvait être détournée frauduleusement.

En effet, si un fraudeur est capable de retrouver les différentes instructions déroulées en séquence par le microprocesseur, il pourrait arriver à déterminer le moment précis de la séquence où l'état d'un ou de plusieurs capteurs est lu. Pour une opération donnée (mise sous tension, attente d'une instruction opérateur, exécution d'une lecture, ou d'une programmation ou d'une vérification de code d'identification), comme il s'agit d'instructions séquentielles, ce moment est toujours le même.

Il suffirait alors d'assurer des conditions normales jusqu'au moment où on lit l'état du capteur, et de modifier ces conditions juste après. Au moment où le microprocesseur lit les capteurs, les conditions correspondantes sont normales, il continue donc une exécution normale. Mais en fait, les conditions de fonctionnement sont changées juste après et ne sont plus "normales".

On s'est donc aperçu de ce que l'exploitation séquentielle de l'état des capteurs certes plus souple qu'une exploitation par interruption, pouvait cependant permettre de contourner le contrôle des capteurs de sécurité : Après lecture du ou des capteurs, des changements ultérieurs ne sont pas vus par le microprocesseur tant qu'il n'effectue pas un nouveau contrôle. Or, il n'est pas possible de lire continuellement ces capteurs car on ralentirait trop le déroulement des programmes. On effectue en général une lecture à l'initialisation et au moins une fois à un moment approprié pour chaque sous-programme, par exemple juste avant une opération stratégique.

Un objectif de l'invention est de sécuriser le processus de contrôle des capteurs de sécurité. Si on arrive à empêcher la détermination du ou des moments où les capteurs sont lus, il sera beaucoup plus difficile de réussir à imposer des conditions anormales au circuit intégré sans que cela ne soit détecté par le microprocesseur.

Un procédé selon l'invention est défini à la revendication 1.

Il convient de noter que la demande de brevet européen EP-A-0482975 décrit un procédé pour accroître la sécurité d'une carte à puce grâce à un générateur de durée aléatoire. Toutefois, ce générateur y est utilisé pour augmenter la durée d'exécution des programmes de manière aléatoire pour empêcher un fraudeur de deviner les instructions exécutées. Par contre, le procédé de l'invention ne cherche pas à empêcher un fraudeur de savoir quelles instructions sont exécutées, mais quand certaines d'entres elles - celles de lecture des registres - le sont. C'est très différent.

D'autres caractéristiques et avantages sont précisés dans la description qui suit, faite à tire indicatif et non limitatif de l'invention et en référence aux dessins annexés, dans lesquels :
- la figure 1 est un schéma général d'un circuit intégré utilisé en relation avec un dispositif pour appliquer un procédé selon l'invention et
- la figure 2 est un organigramme correspondant à un procédé selon l'invention.

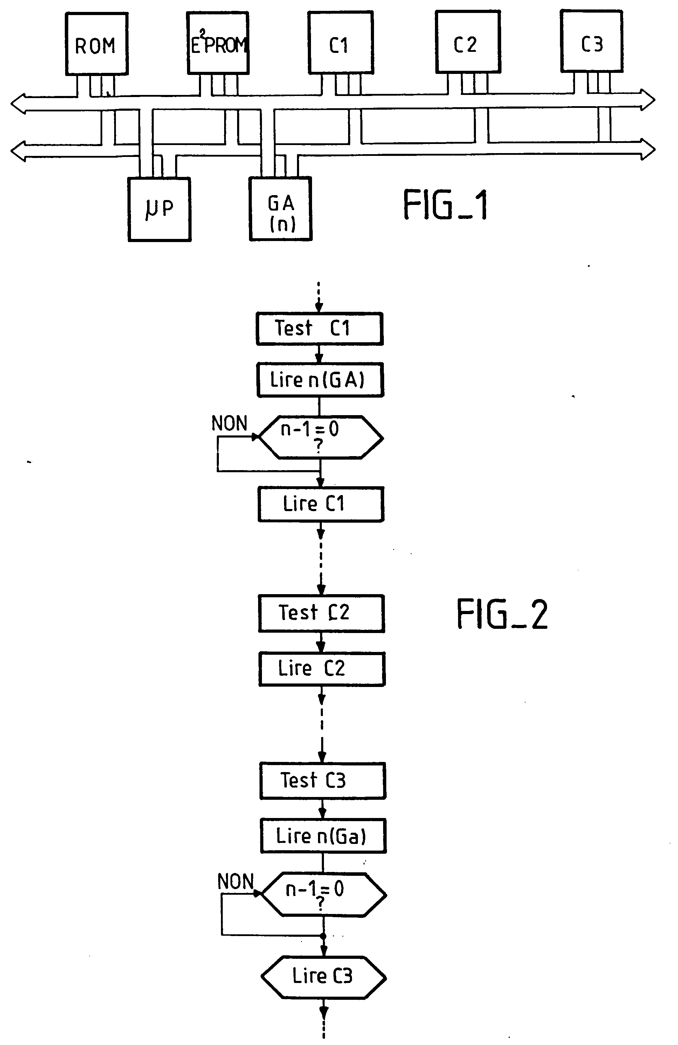

Un circuit intégré comprend dans l'invention et comme représenté en figure 1, un microprocesseur µP, une mémoire de programme ROM, une mémoire non volatile, par exemple de type E²PROM, et des capteurs de sécurité pour détecter des conditions anormales de fonctionnement. Dans l'exemple représenté, ils sont au nombre de trois, C1 pour détecter une température trop haute, C2 pour détecter une fréquence trop basse et C3 pour détecter une tension d'alimentation trop haute. On a vu plus haut que d'autres capteurs peuvent être prévus pour détecter une dépassivation, une température ou une tension trop basse, ... Ces capteurs sont utilisés couramment et sont bien connus de l'homme du métier ; leur réalisation ne sera donc pas détaillée.

Ces capteurs délivrent une information logique binaire, qui indique un fonctionnement normal ou une alarme selon le cas. Cette information est mémorisée dans un registre (confondu sur la figure 1 avec le capteur), qui est lu par le microprocesseur.

Selon l'invention, le circuit intégré comprend en outre un générateur pseudo-aléatoire GA pour fournir une valeur aléatoire n sur commande du microprocesseur.

Selon l'invention, lorsque le microprocesseur qui exécute un sous-programme en réponse à un signal d'initialisation ou d'une commande externe, reçoit une instruction interne de tester un capteur, il commence par demander une valeur n au générateur pseudo-aléatoire GA pour initialiser une boucle de comptage. Quand le nombre n a été décompté (à la cadence du cycle instruction du microprocesseur), le microprocesseur lit le registre du capteur pour le traiter selon un programme de gestion des anomalies.

Si le circuit intégré comprend plusieurs capteurs, le microprocesseur peut appliquer ce procédé à tous les capteurs ou seulement à certains. Il l'applique au moins au premier capteur testé en séquence. Dans l'exemple représenté à la figure 2 d'une séquence de test des capteurs, ce procédé est appliqué aux capteurs C1 et C3 de la figure 1, pas au capteur C2.

De cette manière, une durée aléatoire est introduite dans le programme séquentiel, ce qui rend difficile la détermination du moment où les capteurs sont lus. En contrepartie, on allonge la durée du programme.

Il faut donc évaluer, selon le degré de sécurité recherché, le retard que l'on peut admettre dans l'exécution du programme. Par exemple, on peut déterminer une largeur du nombre aléatoire fonction de la nature du capteur à tester. Si on veut une sécurité maximum, on appliquera le procédé de l'invention à tous les capteurs du circuit intégré.

## Revendications

1. Procédé pour accroître la sécurité d'un circuit intégré comportant au moins un microprocesseur et un ou plusieurs capteurs de sécurité pour détecter des conditions anormales de fonctionnement, des registres accessibles par le microprocesseur étant prévus pour mémoriser chacun l'état d'un capteur respectif, caractérisé en ce qu'il consiste pour au moins un desdits registres, lorsque le microprocesseur reçoit une instruction de lecture de ce registre, à n'effectuer cette lecture qu'au bout d'une durée aléatoire.

2. Procédé selon la revendication 1, caractérisé en ce qu'il consiste, à chaque fois que le microprocesseur doit lire ledit registre, à lui faire tirer une valeur aléatoire pour initialiser une boucle de comptage.

3. Procédé selon l'une quelconque des revendications 1 et 2, caractérisé en ce qu'il est appliqué à chaque registre.

4. Dispositif pour la mise en oeuvre du procédé selon l'une quelconque des revendications 1 à 3, caractérisé en ce qu'il comprend un générateur pseudo-aléatoire couplé au microprocesseur.

## Patentansprüche

1. Verfahren zum Erhöhen der Sicherheit eines integrierten Schaltkreises, der wenigstens einen Mikroprozessor und eine oder mehrere Sicherheitsmeßeinrichtungen zum Erfassen von anomalen Betriebsbedingungen aufweist, wobei durch den Mikroprozessor zugängliche Register vorgesehen sind, um jeden Zustand einer jeweiligen Meßeinrichtung abzuspeichern,
dadurch gekennzeichnet, daß
es auf wenigstens eins der Register angewendet wird, wenn der Mikroprozessor einen Befehl zum Lesen dieses Registers empfängt, wobei dieses Lesen erst am Ende einer zufälligen Dauer ausgeführt wird.

2. Verfahren nach Anspruch 1, dadurch gekennzeichnet, daß es darin besteht, daß jedesmal, wenn der Mikroprozessor das Register lesen muß, dieser einen Zufallswert ziehen muß, um eine Zählschleife zu initialisieren.

3. Verfahren nach einem der Ansprüche 1 oder 2, dadurch gekennzeichnet, daß es auf jedes Register angewendet wird.

4. Vorrichtung zum Umsetzen des Verfahrens nach einem der Ansprüche 1 bis 3, dadurch gekennzeichnet, daß sie einen Pseudozufallsgenerator umfaßt, der mit dem Mikroprozessor gekoppelt ist.

## Claims

1. Method for increasing the security of an integrated circuit including at least one microprocessor and one or more security sensors for detecting abnormal operating conditions, registers which can be accessed by the microprocessor being provided in order each to store the state of a respective sensor, characterised in that it consists, for at least one of the said registers, when the microprocessor receives an instruction to read this register, of performing this reading only at the end of a random period.

2. Method according to Claim 1, characterised in that it consists, each time the microprocessor is to read the said register, of causing it to draw a random value in order to initialise a counting loop.

3. Method according to either one of Claims 1 and 2, characterised in that it is applied to each register.

4. Device for implementing the method according to any one of Claims 1 to 3, characterised in that it comprises a pseudorandom generator coupled to the microprocessor.
